# EUROPÄISCHE PATENTSCHRIFT

(11) **EP 1 518 759 B1**
(45) Veröffentlichungstag und Bekanntmachung des Hinweises auf die Patenterteilung: **15.02.2006**
(21) Anmeldenummer: 04012853.0
(22) Anmeldetag: 01.06.2004
(51) Int. Cl.: B60R 21/02, B66F 9/075, B66F 17/00

(54) **Rückhaltesystem für ein Flurförderfahrzeug**
Safety device for a handling vehicle
Dispositif de sécurité pour un véhicule de manutention

(30) Priorität: 24.09.2003 DE 20314891 U
(43) Veröffentlichungstag der Anmeldung: 30.03.2005
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred

(56) Entgegenhaltungen:
- DE-U- 29 900 292
- US-A- 5 894 905

## Beschreibung

Die Erfindung betrifft ein Rückhaltesystem für ein Fahrzeug gemäß dem Oberbegriff des Patentanspruchs 1.

Aus der gattungsbildenden DE 202 02 522 U1 ist ein Rückhaltesystem eines Fahrzeugs bekannt, das einen verschwenkbaren Schutzbügel aufweist. Dieser Schutzbügel hält in seiner Rückhaltestellung den Fahrer beim Umkippen des Fahrzeugs auf dem Fahrersitz fest, so daß er nicht unter das umkippende Fahrzeug geraten kann. In einer nach oben verschwenkten Freigabestellung kann der Fahrer bequem in das Fahrzeug ein- bzw. aus diesem aussteigen. Dieses Rückhaltesystem hat sich in der Praxis gut bewährt und bildet den Ausgangspunkt der vorliegenden Erfindung.

Der Erfindung liegt die Aufgabe zugrunde, ein Rückhaltesystem der eingangs genannten Art zu schaffen, bei dem der Schutzbügel hohen Belastungen standhält und die Wartung des Fahrzeugs in keiner Weise behindert wird.

Diese Aufgabe wird erfindüngsgemäß mit den Merkmalen des Patentanspruchs 1 gelöst.

Das Rückhaltesystem gemäß Anspruch 1 kann für beliebige, insbesondere offene Fahrzeuge eingesetzt werden, ist jedoch vorzugsweise für Flurförderfahrzeuge gedacht. Das Fahrzeug weist einen Fahrersitz für den Fahrer auf. Bei Unfällen kann es vorkommen, daß das Fahrzeug seitlich umkippt. Gerät der Fahrer bei einem derartigen Unfall unter das kippende Fahrzeug, so kann es zu schweren, ggf. tödlichen Verletzungen kommen. Zu diesem Zweck weist das Rückhaltesystem einen Schutzbügel auf, der den Fahrer auf dem Fahrersitz hält. Um trotz des Schutzbügels ein einfaches Verlassen des Fahrzeugs zu ermöglichen, ist der Schutzbügel zwischen einer im wesentlichen vertikal nach oben gerichteten Freigabestellung und einer im wesentlichen horizontalen Rückhaltestellung verschwenkbar. In der Freigabestellung wird der Raum neben dem Fahrersitz in keiner Weise behindert, während er in der Rückhaltestellung dem Fahrersitz zugeordnet ist und die geschilderte Rückhaltewirkung besitzt. Zur Verbesserung der Rückhaltewirkung ist am Schutzbügel ein Sicherheitsgurt festgelegt. Vorzugsweise ist das Ende des Sicherheitsgurts im Bereich des freien Endes des Schutzbügels festgelegt. Dadurch wird erreicht, daß bereits durch das Schließen des Schutzbügels ohne weitere Maßnahmen der Sicherheitsgurt angelegt ist, so daß das Anlegen des Sicherheitsgurts durch den Fahrer nicht mehr vergessen werden kann. Beim Öffnen des Schutzbügels wird der Sicherheitsgurt automatisch vom Fahrer weggezogen, so daß er durch den Sicherheitsgurt nicht beim Ein- bzw. Aussteigen behindert wird.

Damit der Schutzbügel hohen seitlichen Kräften, die bei Unfällen auftreten können, sicher standhält, ist sein freies Ende in der Rückhaltestellung gemäß Anspruch 2 in einem Schloß einrastbar. Hierdurch ist der Schutzbügel in der Rückhaltestellung an beiden Enden einerseits in einem Drehgelenk und andererseits im Schloß abgestützt, so daß keine hohen Hebelkräfte gegen den Schutzbügel wirken. Der Schutzbügel kann daher erheblich größere Seitenkräfte aufnehmen, als dies bei ausschließlich im Drehgelenk gehaltenen Schutzbügeln der Fall wäre. Zusätzlich verhindert das Schloß ein versehentliches Überführen des Schutzbügels in die Freigabestellung, wodurch die Schutzwirkung des Rückhaltesystems verloren ginge. Um die Wartung des Fahrzeugs in keiner Weise zu behindern, ist es wichtig, daß eine Haube, die den Motor bzw. die Batterie des Fahrzeugs abdeckt, leicht geöffnet werden kann. Auf dieser Haube ist jedoch das Schloß zur Arretierung des Schutzbügels gehalten, das insbesondere bei klein bauenden Flurförderfahrzeugen beim Aufklappen der Haube gegen einen hinteren Holm stößt. Damit würde das Schloß ein vollständiges Öffnen der Haube verhindern und damit die Wartung des Fahrzeugs erheblich behindern. Zu diesem Zweck ist das Schloß quer zum Fahrzeug verstellbar an der Haube gehalten. Sollen Wartungsarbeiten durchgeführt werden, so wird das Schloß einfach nach außen verstellt, so daß es problemlos am Holm vorbei greift und damit die Haube vollständig geöffnet werden kann. Bei geschlossener Motorhaube wird das Schloß bezüglich seiner Verschwenkbarkeit arretiert, um ein einfaches Einrasten des Schutzbügels zu gewährleisten.

Eine einfache Realisierung der Verstellbarkeit des Schlosses in Form einer Schwenklagerung ergibt sich aus Anspruch 3. Ein Schwenklager läßt sich einfach und mit hoher Präzision realisieren. Außerdem reicht der auf diese Weise erreichbare Verstellweg in der Regel aus.

Alternativ ist es gemäß Anspruch 4 günstig, das Schloß quer zum Fahrzeug zu verschieben. Auf diese Weise können beliebig große Stellwege erzielt werden. Vorzugsweise ist das schloß in einem Halter geführt, er eine quer zum Fahrzeug ausgerichtete Langlochbohrung aufweist. In diese Bohrung greift ein Stift des Schlosses ein, der in der Langlochbohrung geführt ist.

Um eine einfache Bedienbarkeit des Schutzbügels sicherzustellen, ist es wichtig, daß das Schloß ergonomisch günstig vom Fahrersitz aus zu erreichen ist. In der Regel ist der Fahrersitz längs zum Fahrzeug verstellbar ausgebildet, um eine Anpassung des Fahrersitzes an unterschiedliche Personengrößen zu ermöglichen. Um auch in diesem Fall eine sichere Bedienbarkeit zu gewährleisten, ist es gemäß Anspruch 5 vorteilhaft, wenn das Schloß an einem Schiebeschlitten längs zum Fahrzeug verschiebbar gehalten ist. Zusätzlich ist auf diese Weise eine Anpassung des Sicherheitsgurtes an die jeweilige Position des Fahrersitzes gewährleistet. Es ist auch daran gedacht, das Schloß mit dem Fahrersitz zu verbinden, so daß es in jeder Stellung des Fahrersitzes ohne weitere Anpassung optimal plaziert ist.

Um sicherzustellen, daß der Schutzbügel mit seinem freien Ende mit dem Schloß korrespondiert, ist es gemäß Anspruch 6 günstig, wenn der Schutzbügel teleskopierbar ist. Vorzugsweise wird die Länge des Schutzbügels in der Rückhaltestellung angepaßt, so daß eine exakte Ausrichtung der Schutzbügellänge zum Schloß gewährleistet ist.

Um sicherzustellen, daß das Schloß in seiner eingestellten Lage verbleibt bzw. der Schutzbügel seine Länge beibehält, ist es gemäß Anspruch 7 günstig, wenn der Schiebeschlitten bzw. der Schutzbügel arretierbar ist. Durch Lösen der Arretierung kann das Schloß zusammen mit dem Schutzbügel leicht angepaßt werden. Nach erfolgter Anpassung werden vorzugsweise beide Teile arretiert, so daß eine versehentliche Verstellung des Schiebeschlittens bzw. der Schutzbügellänge nicht mehr möglich ist.

Um ein einfaches Öffnen des Schutzbügels zu erreichen, ist es gemäß Anspruch 8 vorteilhaft, wenn am Schutzbügel mindestens eine Gasfeder angreift, die diesen in die Freigabestellung vorspannt. Damit muß zum Öffnen des Bügels nicht dessen Gewicht angehoben werden, so daß sich die Bedienung des Rückhaltesystems erheblich vereinfacht.

Insbesondere bei Verwendung eines Automatik-Gurtes ist es wichtig, daß der Schutzbügel hinreichend langsam geöffnet wird, um ein Sperren des Sicherheitsgurtes beim Öffnen eines Schutzbügels zu verhindern. Andererseits muß die Gasfeder hinreichend stark ausgebildet sein, um ein ausreichend rasches Öffnen des Schutzbügels zum Verlassen des Fahrzeugs zu gewährleisten. Dies wird am einfachsten gemäß Anspruch 9 dadurch erfüllt, daß die Gasfeder in ihrer Schubkraft einstellbar ist.

Um zu verhindern, daß der Fahrer das Fahrzeug bedient, ohne den Schutzbügel in die Rückhaltestellung zu bringen, ist es gemäß Anspruch 10 günstig, am Schloß mindestens einen Sensor bzw. Schalter vorzusehen. Dieser verhindert den Betrieb des Fahrzeugs bei nicht eingerastetem Schutzbügel, so daß das Rückhaltesystem nicht umgangen werden kann.

Um sicherzustellen, daß der Sicherheitsgurt stets die korrekte, an den Fahrer angepaßte Länge aufweist, ist der Sicherheitsgurt gemäß Anspruch 11 in einer Gurtrolle aufrollbar. Dadurch wird auch die Bewegungsfreiheit des Fahrers in keiner Weise eingeschränkt. Um bei einem Unfall eine sichere Rückhaltewirkung des Sicherheitsgurts zu erzielen, sperrt die Gurtrolle ab einer vorgegebenen Neigung. Auf diese Weise ist gewährleistet, daß der Sicherheitsgurt arretiert ist, wenn das Fahrzeug umkippt, selbst wenn keine schlagartigen Zugkräfte auf den Sicherheitsgurt einwirken. Diese Maßnahme erleichtert außerdem die Dimensionierung der auf den Schutzbügel wirkenden Gasfeder, da der Sicherheitsgurt unabhängig von der Geschwindigkeit des sich verschwenkenden Schutzbügels in der Gurtrolle aufrollbar ist.

Zur Erzielung einer ausreichenden Schutzwirkung und gleichzeitig einfachen Wartbarkeit des Fahrzeugs ist es gemäß Anspruch 12 vorteilhaft, wenn die Gurtrolle in Fahrzeuglängsrichtung eine geringere Ansprechempfindlichkeit aufweist als in Fahrzeugquerrichtung. Damit kann die Motorhaube, die den Fahrersitz und damit die Gurtrolle trägt, sehr einfach geöffnet werden, ohne daß die Gurtrolle den Sicherheitsgurt sperrt. In Fahrzeugquerrichtung ist die Ansprechempfindlichkeit jedoch höher, so daß bereits geringe Neigungen des Fahrzeugs in Querrichtung zu einem Sperren des Sicherheitsgurts führen.

Eine einfache Realisierung einer neigungsabhängigen Arretierung des Sicherheitsgurts ergibt sich aus Anspruch 13. Dabei weist die Gurtrolle mindestens einen Klemmkörper, vorzugsweise in Form einer Kugel auf, der beim Verschwenken der Gurtrolle den Sicherheitsgurt arretiert. Vorzugsweise greift der Klemmkörper in entsprechende Keilflächen ein, die die Arretierung des Sicherheitsgurts auslösen. Durch entsprechende Dimensionierung der Keilflächen kann die Ansprechempfindlichkeit des Klemmkörpers in weiten Grenzen eingestellt werden.

Schließlich ist es gemäß Anspruch 14 günstig, den Klemmkörper auf einer Fläche abzustützen und federnd zu halten. Damit ergibt sich ein einfacher Aufbau des Arretier-Mechanismus für die Gurtrolle, wobei die Ansprechempfindlichkeiten durch entsprechende Vorspannung der Federn einstellbar sind.

Der Erfindungsgegenstand wird beispielhaft anhand der Zeichnung erläutert, ohne den Schutzumfang zu beschränken.

Es zeigt:
- Figur 1: eine räumliche Darstellung eines Rückhaltesystems in der Rückhaltestellung,
- Figur 2: eine räumliche Detaildarstellung des Rückhalte-systems gemäß Figur 1,
- Figur 3: eine weitere räumliche Detaildarstellung gemäß Figur 2 und
- Figur 4: eine Gurtrolle.

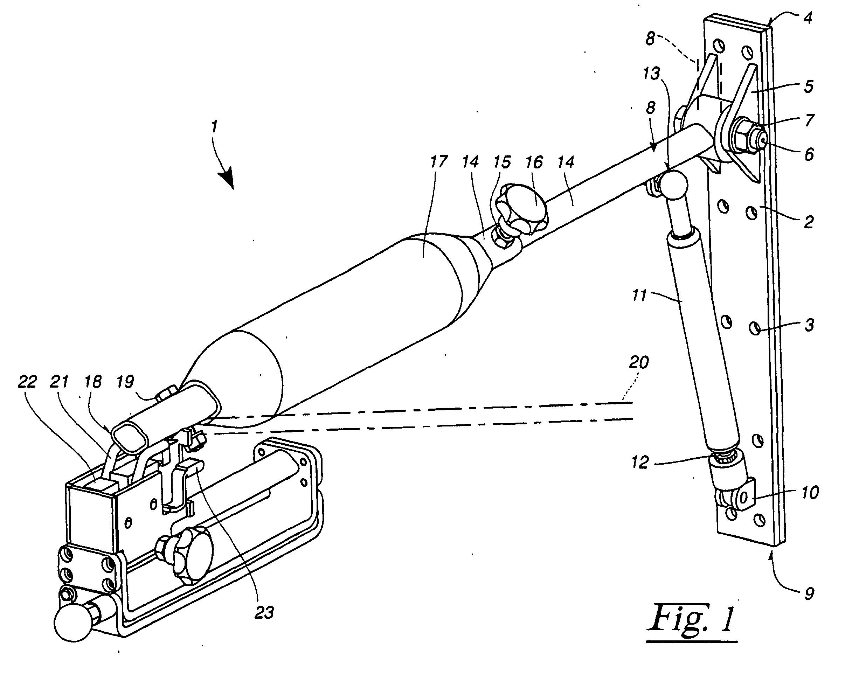

Ein Rückhaltesystem 1 gemäß Figur 1 weist einen Flansch 2 auf, der an einem nicht dargestellten, vorderen Holm eines Flurförderfahrzeugs festgelegt ist. Zu diesem Zweck sind am Flansch 2 eine Reihe von Bohrungen 3 vorgesehen, die von nicht dargestellten Schrauben durchsetzt sind.

Im Bereich des oberen Endes 4 des Flansches 2 sind zwei Laschen 5 vorgesehen, die von einem gemeinsamen Bolzen 6 durchsetzt sind. Dieser Bolzen 6 ist als Schraubbolzen mit endseitiger Mutter 7 ausgebildet. Der Bolzen 6 bildet ein Drehgelenk für einen Schutzbügel 8.

Im Bereich des unteren Endes 9 sind am Flansch 2 weitere Laschen 10 vorgesehen, an denen eine Gasfeder 11 verschwenkbar abgestützt ist. Diese Gasfeder 11 ist über eine Einstellschraube 12 in ihrer Stärke veränderbar. Das Gegenende 13 der Gasfeder 11 greift gelenkig am Schutzbügel 8 an. Auf diese Weise wird der Schutzbügel 8 durch die Gasfeder 11 aus der in Figur 1 dargestellten Rückhaltestellung in eine strichliert dargestellte Freigabestellung vorgespannt.

Der Schutzbügel 8 wird von zwei ineinander gesteckten Teleskoprohren 14 gebildet, so daß dieser bezüglich seiner Längserstreckung verstellbar ausgebildet ist. Im äußeren Teleskoprohr 14 ist eine Arretierschraube 15 vorgesehen, die mittels eines Drehknopfs 16 betätigbar ist. Durch Festziehen der Arretierschraube 15 können die beiden Teleskoprohre 14 miteinander verblockt werden, so daß der Schutzbügel 8 gegenüber einer teleskopartigen Verstellung arretiert ist. Dadurch ist gewährleistet, daß der Schutzbügel 8 stets seine vorgegebene Länge aufweist, bis diese bewußt durch Öffnen der Arretierschraube 15 verstellt wird.

Am Schutzbügel 8 ist außerdem ein Kissen 17 angebracht, welches aus einem weichen Material erstellt ist. Dieses Kissen 17 verhindert Verletzungen des Fahrers, wenn dieser gegen den Schutzbügel 8 gedrückt wird.

Im Bereich des freien Endes 18 des Schutzbügels 8 ist ein Schraubbolzen 19 vorgesehen, durch den ein strichpunktiert angedeuteter Sicherheitsgurt 20 am Schutzbügel 8 festgelegt ist. Dieser Sicherheitsgurt 20 ist als Beckengurt ausgebildet und greift in der in Figur 1 dargestellten Rückhaltestellung über den gesamten Fahrersitz hinweg zum Schutzbügel 8. Damit verhindert der Sicherheitsgurt 20 zusätzlich zum Schutzbügel 8, daß der Fahrer bei einem Unfall aus dem Fahrzeug geschleudert wird. Dies ist insbesondere bei Fahrzeugen mit offener Kabine wichtig.
Im Bereich des freien Endes 18 des Schutzbügels 8 ist an diesem eine U-förmige Klinke 21 festgelegt. Diese Klinke 21 greift in der in Figur 1 dargestellten Rückhaltestellung in ein Schloß 22 ein. Dieses Schloß 22 sorgt für eine Arretierung des Schutzbügels 8 in der Rückhaltestellung. Zusätzlich bewirkt dieses Schloß 22 zusammen mit dem Bolzen 6 eine beidseitige Lagerung des Schutzbügels 8, so daß dieser sehr hohe Seitenkräfte überstehen kann, ohne sich zu deformieren. Zum Öffnen des Schlosses 22 muß lediglich ein Hebel 23 verschwenkt werden, so daß der Schloßmechanismus die Klinke 21 freigibt und damit der Schutzbügel 8 durch den Druck der Gasfeder 11 in die strichliert dargestellte Freigabestellung überführt wird. Dagegen erfolgt das Schließen des Schlosses 22 durch einfaches Eindrücken des Schutzbügels 8 in das Schloß 22.

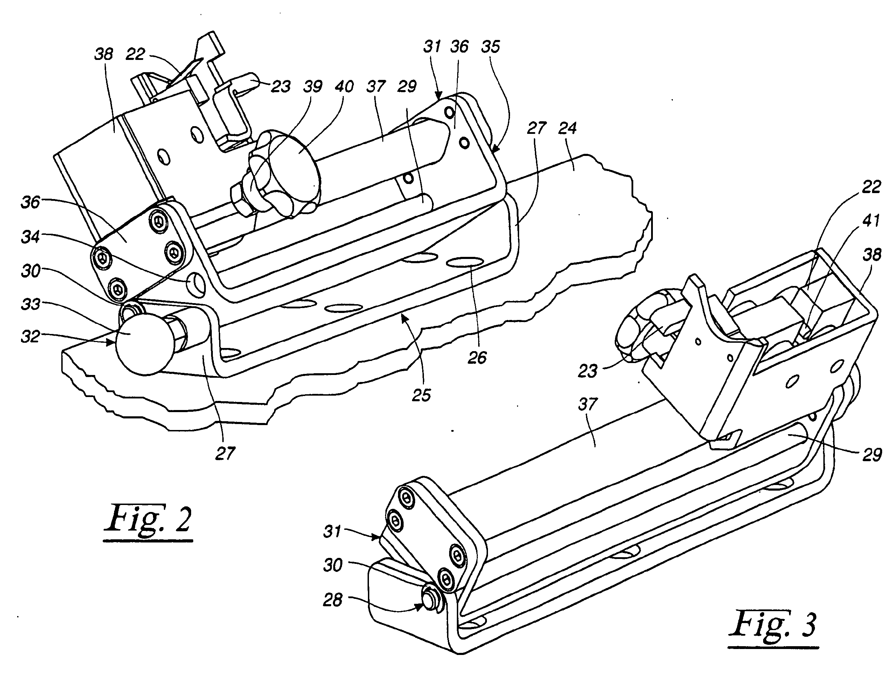

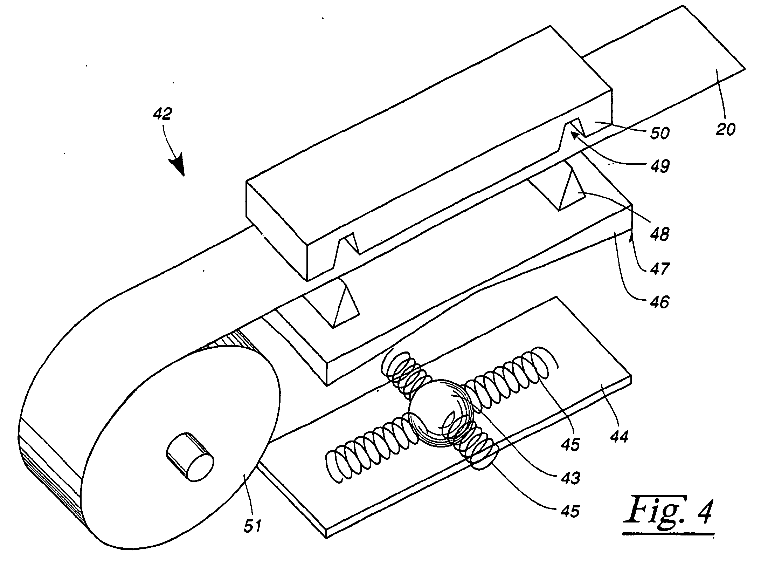

Die weitere Beschreibung des Rückhaltesystems 1 erfolgt anhand der Detaildarstellungen gemäß den Figuren 2 und 3. Auf einer Haube 24, die den Motor- bzw. Batterieraum des Flurförderfahrzeugs abdeckt, ist ein U-förmiges Halteprofil 25 festgeschraubt. Die hierzu erforderlichen Schraubbolzen sind dabei der Einfachheit halber nicht dargestellt und stattdessen lediglich Bohrungen 26 des Halteprofils 25 sichtbar. An den nach oben gezogenen Schenkeln 27 des Halteprofils 25 sind zueinander fluchtende Bohrungen 28 vorgesehen, die von einem gemeinsamen Bolzen 29 durchsetzt sind. Dieser Bolzen 29 ist beidendig von Splinten 30 gesichert und bildet ein Schwenklager für eine Schiebeführung 31. Auf diese Weise kann die Schiebeführung 31 und damit das Schloß 22 nach außen verschwenkt werden, wenn die Haube 24 geöffnet werden soll. In diesem Fall behindert das Schloß 22 das Öffnen der Haube 24 auch dann nicht, wenn das Schloß 22 in der in Figur 1 dargestellten Rückhaltestellung mit einem hinteren Holm des Flurförderfahrzeugs fluchtet. Dies erleichtert die Wartungsarbeiten für das Flurförderfahrzeug erheblich.

Um die Schiebeführung 31 in der Rückhaltestellung arretieren zu können, ist der Schenkel 27 des Halteprofils 25 mit einer Arretiervorrichtung 32 versehen. Diese Arretiervorrichtung 32 wird von einem Haltegriff 33 gebildet, der mit einem nicht sichtbaren Arretierstift verbunden ist. Dieser Arretierstift ist zusammen mit dem Haltegriff 33 federnd gegen die Schiebeführung 31 vorgespannt. Die Schiebeführung 31 weist eine Bohrung 34 auf, die in eingeklappter Lage mit dem Arretierstift fluchtet. Beim Verschwenken der Schiebeführung 31 in die in Figur 1 dargestellte Rückhaltestellung greift demnach der Arretierstift durch die federnde Vorspannung in die Bohrung 34 ein und arretiert diesen gegenüber einer weiteren Verschwenkung. Um den Schiebeschlitten 31 wieder verschwenken zu können, muß der Haltegriff 33 mit dem daran befestigten Arretierstift herausgezogen werden, so daß der Arretierstift nicht mehr in die Bohrung 34 eingreift.

Die Schiebeführung 31 wird von einem U-förmigen Profil 35 gebildet, welches vom Bolzen 29 durchsetzt ist. Zwischen den nach oben gezogenen Schenkeln 36 des Profils 35 ist eine Schiene 37 gehalten, an der ein Schiebeschlitten 38 längsverschiebbar gehalten ist.

Der Schiebeschlitten 38 ist von einer Arretierschraube 39 durchsetzt, die mittels eines Drehknopfs 40 bedienbar ist. Mit Hilfe dieser Arretierschraube 39 kann der Schiebeschlitten 38 in jeder beliebigen Lage arretiert werden, um eine weitere, ungewollte Verschiebung des Schiebeschlittens 38 zu verhindern. Im Schiebeschlitten 38 ist das Schloß 22 vorgesehen, welches die Klinke 21 des Schutzbügels 8 aufnimmt.

Im Schloß 22 ist außerdem ein Schalter 41 vorgesehen, der von der Klinke 21 des Schutzbügels 8 betätigt wird. Dieser Schalter 41 erfaßt das Einrasten der Klinke 21 und gibt die Funktionen des Flurförderfahrzeugs nur dann frei, wenn sich der Schutzbügel 8 in der Rückhaltestellung befindet.

Figur 4 zeigt eine räumliche Explosionsdarstellung einer Gurtrolle 42. Diese Gurtrolle 42 weist einen Klemmkörper 43 auf, der auf einer Fläche 44 zweidimensional verschiebbar abgestützt ist. Der Klemmkörper 43 ist in Form einer Kugel ausgebildet und von vier Federn 45 in etwa mittig zur Fläche 44 zentriert. Durch Neigung der Gurtrolle 42 und damit der Fläche 44 übt der Klemmkörper 43 eine zusätzliche Kraft parallel zur Fläche 44 aus, so daß sich der Klemmkörper 43 relativ zur Fläche 44 verschiebt.

Knapp oberhalb des Klemmkörpers 43 ist ein Keil 46 gehalten, der zur besseren Sichtbarkeit in Figur 4 weiter vom Klemmkörper 43 entfernt dargestellt ist. Dieser Keil 46 weist nach unten gerichtete Keilflächen auf, deren Abstand zur Fläche 44 im Bereich der Ecken 47 am Geringsten ist. Durch eine Verschiebung des Klemmkörpers 43 wird der Keil 46 nach oben gedrückt, um den Sicherheitsgurt 20 zu klemmen.

Hierzu weist der Keil 46 Rippen 48 auf, die mit entsprechenden Ausnehmungen 49 eines Widerlagers 50 korrespondieren. Zwischen dem Keil 46 und dem Widerlager 50 ist der Sicherheitsgurt 20 hindurchgeführt, so daß dieser ab einer bestimmten Neigung der Gurtrolle 42 arretiert ist. Die Gurtrolle 42 weist außerdem einen Wickler 51 auf, der den Sicherheitsgurt 20 aufwickelt. Diesem Wickler 51 ist eine nicht dargestellte Drehfeder zugeordnet, die für eine ausreichend hohe Zugkraft auf den' Sicherheitsgurt 20 sorgt.

### Bezugszeichenliste

- 1: Rückhaltesystem
- 2: Flansch
- 3: Bohrung
- 4: oberes Ende des Flansches
- 5: Lasche
- 6: Bolzen
- 7: Mutter
- 8: Schutzbügel
- 9: unteres Ende des Flansches
- 10: Lasche
- 11: Gasfeder
- 12: Einstellschraube
- 13: Gegenende der Gasfeder
- 14: Teleskoprohr
- 15: Arretierschraube
- 16: Drehknopf
- 17: Kissen
- 18: freies Ende des Schutzbügels
- 19: Schraubbolzen
- 20: Sicherheitsgurt
- 21: Klinke
- 22: Schloß
- 23: Hebel
- 24: Haube
- 25: Halteprofil
- 26: Bohrung
- 27: Schenkel
- 28: Bohrung
- 29: Bolzen
- 30: Splint
- 31: Schiebeführung
- 32: Arretiervorrichtung
- 33: Haltegriff
- 34: Bohrung
- 35: Profil
- 36: Schenkel
- 37: Schiene
- 38: Schiebeschlitten
- 39: Arretierschraube
- 40: Drehknopf
- 41: Schalter
- 42: Gurtrolle
- 43: Klemmkörper
- 44: Fläche
- 45: Feder
- 46: Keil
- 47: Ecke
- 48: Rippe
- 49: Ausnehmung
- 50: Widerlager
- 51: Wickler

## Patentansprüche

1. Rückhaltesystem für ein Fahrzeug, insbesondere ein Flurförderfahrzeug, das einen Fahrersitz aufweist, wobei das Rückhaltesystem (1) einen Schutzbügel (8) aufweist, der zwischen einer im wesentlichen vertikal nach oben gerichteten Freigabestellung und einer im wesentlichen horizontalen, dem Fahrersitz zugeordneten Rückhaltestellung verschwenkbar ist, **dadurch gekennzeichnet, daß** am Schutzbügel (8) ein Sicherheitsgurt (20) festgelegt ist.

2. Rückhaltesystem nach Anspruch 1, **dadurch gekennzeichnet, daß** das freie Ende (18) des Schutzbügels (8) in der Rückhaltestellung in einem Schloß (22) einrastbar ist, welches auf einer verschwenkbaren, mindestens einen Motor und/oder eine Batterie abdeckenden Haube (24) des Fahrzeugs montiert ist, wobei das Schloß (22) quer zum Fahrzeug verstellbar und arretierbar an der Haube (24) gehalten ist.

3. Rückhaltesystem nach Anspruch 1 oder 2, **dadurch gekennzeichnet, daß** das Schloß (22) um eine in etwa längs zum Fahrzeug gerichtete Achse (29) verschwenkbar ist.

4. Rückhaltesystem nach Anspruch 1 oder 2, **dadurch gekennzeichnet, daß** das Schloß (22) quer zum Fahrzeug verschiebbar ist.

5. Rückhaltesystem nach mindestens einem der Ansprüche 1 bis 4, **dadurch gekennzeichnet, daß** das Schloß (22) an einem Schiebeschlitten (38) längs-zum Fahrzeug verschiebbar gehalten ist.

6. Rückhaltesystem nach Anspruch 5, **dadurch gekennzeichnet, daß** der Schutzbügel (8) zur Anpassung an die Lage des Schlosses (22) teleskopierbar ist.

7. Rückhaltesystem nach Anspruch 5 oder 6, **dadurch gekennzeichnet, daß** das Schloß (22) bezüglich seiner verschiebbarkeit und/oder der Schutzbügel (8) bezüglich seiner Teleskopierbarkeit arretierbar ist/sind.

8. Rückhaltesystem nach mindestens einem der Ansprüche 1 bis 7, **dadurch gekennzeichnet, daß** am Schutzbügel (8) mindestens eine Gasfeder (11) angreift, die diesen in die Freigabestellung vorspannt.

9. Rückhaltesystem nach Anspruch 8, **dadurch gekennzeichnet, daß** die Gasfeder (11) einstellbar ist.

10. Rückhaltesystem nach mindestens einem der Ansprüche 1 bis 9, **dadurch gekennzeichnet, daß** im Schloß (22) mindestens ein Sensor und/oder Schalter (41) vorgesehen ist, der den Betrieb des Fahrzeugs nur bei eingerastetem Schutzbügel (8) ermöglicht.

11. Rückhaltesystem nach mindestens einem der Ansprüche 1 bis 10, **dadurch gekennzeichnet, daß** der Sicherheitsgurt (20) in einer Gurtrolle (42) aufrollbar ist, die den Sicherheitsgurt (20) ab einer vorgegebenen Neigung der Gurtrolle (42) sperrt.

12. Rückhaltesystem nach Anspruch 11, **dadurch gekennzeichnet, daß** die Gurtrolle (42) in Fahrzeuglängsrichtung eine geringere Ansprechempfindlichkeit aufweist als in Fahrzeugquerrichtung.

13. Rückhaltesystem nach Anspruch 11 oder 12, **dadurch gekennzeichnet, daß** die Gurtrolle (42) mindestens einen Klemmkörper (43) aufweist, der beim Verschwenken der Gurtrolle (42) über die Ansprechempfindlichkeit hinaus den Sicherheitsgurt (20) arretiert.

14. Rückhaltesystem nach Anspruch 13, **dadurch gekennzeichnet, daß** der Klemmkörper (43) auf einer Fläche abgestützt und federnd gehalten ist.

## Claims

1. Restraint system for a vehicle, in particular an industrial truck, which has a driver's seat, the restraint system (1) having a protective bracket (8), which can be pivoted between a release position, which points essentially vertically upwards, and an essentially horizontal restraint position associated with the driver's seat, **characterized in that** a safety belt (20) is fixed to the protective bracket (8).

2. Restraint system according to Claim 1, **characterized in that** the free end (18) of the protective bracket (8) can be latched into a lock (22) in the restraint position, said lock (22) being mounted on a bonnet (24) of the vehicle which can be pivoted and covers at least an engine and/or a battery, the lock (22) being held on the bonnet (24) such that it can be displaced transversely with respect to the vehicle and such that it can be locked.

3. Restraint system according to Claim 1 or 2, **characterized in that** the lock (22) can be pivoted about an axis (29) which is aligned approximately longitudinally with respect to the vehicle.

4. Restraint system according to Claim 1 or 2, **characterized in that** the lock (22) can be displaced transversely with respect to the vehicle.

5. Restraint system according to at least one of Claims 1 to 4, **characterized in that** the lock (22) is held on a sliding block (38) such that it can be displaced longitudinally with respect to the vehicle.

6. Restraint system according to Claim 5, **characterized in that** the protective bracket (8) can be telescoped so as to adapt to the position of the lock (22).

7. Restraint system according to Claim 5 or 6, **characterized in that** the lock (22) can be locked with respect to its displaceability and/or the protective bracket (8) can be locked with respect to its ability to be telescoped.

8. Restraint system according to at least one of Claims 1 to 7, **characterized in that** at least one gas spring (11) acts on the protective bracket (8) and prestresses it in the release position.

9. Restraint system according to Claim 8, **characterized in that** the gas spring (11) can be adjusted.

10. Restraint system according to at least one of Claims 1 to 9, **characterized in that** at least one sensor and/or switch (41) is provided in the lock (22) and only allows operation of the vehicle when the protective bracket (8) is latched in.

11. Restraint system according to at least one of Claims 1 to 10, **characterized in that** the safety belt (20) can be rolled up into a belt reel (42), which blocks the safety belt (20) beyond a predetermined inclination of the belt reel (42).

12. Restraint system according to Claim 11, **characterized in that** the belt reel (42) has a lower response threshold in the longitudinal direction of the vehicle than in the transverse direction of the vehicle.

13. Restraint system according to Claim 11 or 12, **characterized in that** the belt reel (42) has at least one clamping body (43), which locks the safety belt (20) when the belt reel (42) is pivoted beyond the response threshold.

14. Restraint system according to Claim 13, **characterized in that** the clamping body (43) is supported and held in a resilient manner on a surface.

## Revendications

1. Système de retenue pour un véhicule, notamment un chariot de manutention, qui présente un siège de conducteur, le système de retenue (1) présentant un arceau de sécurité (8) qui peut pivoter entre une position de libération orientée essentiellement verticalement vers le haut et une position de retenue associée au siège du véhicule, essentiellement horizontale, **caractérisé en ce qu'**une ceinture de sécurité (20) est fixée sur l'arceau de sécurité (8).

2. Système de retenue selon la revendication 1, **caractérisé en ce que** l'extrémité libre (18) de l'arceau de sécurité (8) peut être encliquetée dans la position de retenue dans une serrure (22) qui est montée sur un capot pivotant (24) du véhicule, recouvrant au moins un moteur et/ou une batterie, la serrure (22) étant maintenue de manière réglable transversalement au véhicule et de manière à pouvoir être bloquée sur le capot (24).

3. Système de retenue selon la revendication 1 ou 2, **caractérisé en ce que** la serrure (22) peut pivoter autour d'un axe (29) orienté approximativement longitudinalement par rapport au véhicule.

4. Système de retenue selon la revendication 1 ou 2, **caractérisé en ce que** la serrure (22) peut être déplacée transversalement au véhicule.

5. Système de retenue selon au moins l'une quelconque des revendications 1 à 4, **caractérisé en ce que** la serrure (22) est maintenue sur un chariot coulissant (38) de manière déplaçable le long du véhicule.

6. Système de retenue selon la revendication 5, **caractérisé en ce que** l'arceau de sécurité (8) peut être télescopé pour s'adapter à la position de la serrure (22).

7. Système de retenue selon la revendication 5 ou 6, **caractérisé en ce que** la serrure (22) peut être bloquée en termes de sa capacité de déplacement et/ou l'arceau de sécurité (8) peut être bloqué en termes de sa capacité de télescopage.

8. Système de retenue selon au moins l'une quelconque des revendications 1 à 7, **caractérisé en ce qu'**au moins un ressort à gaz (11) agit sur l'arceau de sécurité (8), lequel précontraint ce dernier dans la position de libération.

9. Système de retenue selon la revendication 8, **caractérisé en ce que** le ressort à gaz (11) est ajustable.

10. Système de retenue selon au moins l'une quelconque des revendications 1 à 9, **caractérisé en ce que** l'on prévoit dans la serrure (22) au moins un capteur et/ou un commutateur (41) qui permet le fonctionnement du véhicule seulement lorsque l'arceau de sécurité (8) est encliqueté.

11. Système de retenue selon au moins l'une quelconque des revendications 1 à 10, **caractérisé en ce que** la ceinture de sécurité (20) peut être enroulée dans un enrouleur de ceinture (42) qui bloque la ceinture de sécurité (20) à partir d'une inclinaison prédéfinie de l'enrouleur de ceinture (42).

12. Système de retenue selon la revendication 11, **caractérisé en ce que** l'enrouleur de ceinture (42) présente dans la direction longitudinale du véhicule une sensibilité de réaction plus faible que dans la direction transversale du véhicule.

13. Système de retenue selon la revendication 11 ou 12, **caractérisé en ce que** l'enrouleur de ceinture (42) présente au moins un corps de serrage (43) qui, lors du pivotement de l'enrouleur de ceinture (42) au-delà de la sensibilité de réaction, bloque la ceinture de sécurité (20).

14. Système de retenue selon la revendication 13, **caractérisé en ce que** le corps de serrage (43) est supporté sur une surface et est maintenu par des ressorts.
